# EUROPEAN PATENT APPLICATION

(11) **EP 4 518 003 A1**
(43) Date of publication of application: **05.03.2025**
(21) Application number: 23194373.9
(22) Date of filing: 30.08.2023
(51) Int. Cl.: H01M 50/502, H01H 85/044, H01M 50/503, H01H 85/02

(54) **CONNECTION STRUCTURE FOR PROVIDING AN ELECTRICAL CONNECTION AND A BATTERY**

(71) Applicant: Röchling Automotive SE, 68165 Mannheim (DE)
(72) Inventor: Girardi, Saverio, 38123 Trento (IT)
(74) Representative: Ullrich & Naumann PartG mbB

(57) **Abstract**

The invention relates to a connection structure for providing an electrical connection, in particular for contacting battery cells of a battery, comprising a first contacting end and a second contacting end, wherein the first contacting end and the second contacting end are electrically connected via one or more contacting elements, wherein
at least one of the contacting elements provides a fuse function for the electrical connection, 'fuse element', and wherein
at least one of the contacting elements provides a mechanical decompensation function, 'decomp element', said mechanical decompensation function allowing for mechanical decompensation of a relative movement of said first and second contacting ends,
wherein
said at least one fuse element is provided with a mechanical decoupling structure, said mechanical decoupling structure allowing for mechanical decoupling of said fuse element.

## Description

The present invention relates to a connection structure for providing an electrical connection, in particular for contacting battery cells of a battery, comprising a first contacting end and a second contacting end, wherein the first contacting end and the second contacting end are electrically connected via one or more contacting elements, wherein at least one of the contacting elements provides a fuse function for the electrical connection, 'fuse element', and wherein at least one of the contacting elements provides a mechanical decompensation function, 'decomp element', said mechanical decompensation function allowing for mechanical decompensation of a relative movement of said first and second contacting ends.

The present invention further relates to a battery comprising at least one battery cell and a connection structure.

Electrical connection structures for electrically connecting different cells of a battery are well known. For instance US 10,553,387 B1 discloses a connection element in form of a fuse with a housing disposed around a fuse element. On the inside the housing comprises one or more arc-suppression walls disposed adjacent the fuse element and dividing the interior of the housing into multiple compartments. The housing may be made of an electrically insulating material. Furthermore, the housing may comprise pins arranged on the inside and the fuse may comprise holes corresponding to those pins. Thereby, the fuse can be securely connected to the housing.

One of the disadvantages is, however, that a large construction space is required. Further, the fuse element comprises a housing, which is not suitable for connecting different cells of a battery.

An objective of the present invention is therefore to provide a connection structure and a battery, which can be easier manufactured, provide a high degree in reliability in terms of the fusing function and a mechanical deformation compensation.

A further objective of the present invention is to provide an alternative connection structure and an alternative battery with a connection structure.

In an embodiment, the present invention solves the above-mentioned objectives with a connection structure for providing an electrical connection, in particular for contacting battery cells of a battery, comprising a first contacting end and a second contacting end, wherein the first contacting end and the second contacting end are electrically connected via one or more contacting elements, wherein at least one of the contacting elements provides a fuse function for the electrical connection, 'fuse element', and wherein at least one of the contacting elements provides a mechanical decompensation function, 'decomp element', said mechanical decompensation function allowing for mechanical decompensation of a relative movement of said first and second contacting ends, characterized in that said at least one fuse element is provided with a mechanical decoupling structure, said mechanical decoupling structure allowing for mechanical decoupling of said fuse element.

In an embodiment, the present invention solves the above-mentioned objectives with a battery comprising at least one battery cell and a connection structure according to one of the claims 1-14, wherein said second contacting end of said connection structure is electrically connected to a pole of said at least one battery cell.

One of the advantages that may be achieved is a high operation reliability of the connection structure and a battery with a connection structure, in particular in terms of the fusing function.

Further features, advantages and preferred embodiments are disclosed or may become apparent in the following.

According to a preferred embodiment, the mechanical decoupling structure comprises an insulating element for electrically insulating said at least one fuse element. This enables a reliable operation of the fuse element by electrically separating the fuse element from other electric conductors.

According to a further preferred embodiment, the insulating element is made of plastic and/or ceramics. This provides a reliable insulation as well as a cheap manufacturing, in particular in case of plastics.

According to a further preferred embodiment, the insulating element is U-shaped providing at least in part a receptacle for receiving said at least one fuse element. This may provide an easy arrangement of the insulating element and the fuse element as well as a reliable insulation.

According to a further preferred embodiment, said at least one fuse element comprises one or more thinning areas, said at least one thinning area having a lesser amount of electrically conductive material than an area of said at least one fuse element outside the thinning area. This may allow providing an easy fuse function. The fuse function is adapted to the thinning, i.e. the material concentration in a certain section of the fuse element. If the current is too high, then the thinning area of the fuse element is melted interrupting the current.

According to a further preferred embodiment, said at least one thinning area is arranged symmetrically within a main extension direction of said at least one fuse element. This allows an easy manufacturing as well as a reliable fuse function.

According to a further preferred embodiment, at least one thinning area has a smaller diameter in at least one spatial direction than an area of said at least one fuse element outside the thinning area. This may allow for a reliable fuse function while allowing an easy manufacturing.

According to a further preferred embodiment, said at least one fuse element is S-shaped and/or band-shaped, preferably wherein at least one cut-out is provided, preferably wherein said cut-out is rectangular. This enhances the flexibility when designing the fuse element while providing a reliable fuse function.

According to a further preferred embodiment, said at least one fuse element comprises one or more separate electric wires. This provides a fuse element in a simple way.

According to a further preferred embodiment, said at least one fuse element comprises a fixed part and a detachable part, said detachable part is adapted to provide said fuse function. This enhances the ease of maintenance. When the fuse function has been executed, the used detachable part can be replaced with a new part again providing the fuse function.

According to a further preferred embodiment, said one or more contacting elements are ribbon-, strip-, or plate-shaped. This allows for an easy manufacturing.

According to a further preferred embodiment, said at least one fuse element and/or the decomp element are integrally formed in one contacting element. One of the advantages may be that elaboration of a complex connection between these elements can be avoided.

According to a further preferred embodiment, said decomp element comprises a curved section and/or a thinning section. This provides in an easy mechanical way a decomp function for the decomp element.

According to a further preferred embodiment, a plane of a thinning of a thinning area is perpendicular to a plane of said curved section. This allows for a decoupling of the decomp function from the fuse element in the sense that mechanical stress acting upon the structure does not or has a reduced mechanical influence on the fuse element.

According to a further preferred embodiment, said at least one fuse element is located next to the first contacting end and wherein said decomp element is located next to the second contacting end, said second contacting end is adapted to contact a battery cell. This enables to efficiently compensate mechanical deformations caused by the battery cells.

According to a further preferred embodiment, the insulating element is mechanically coupled to the fuse element, preferably detachably. This ensures an easy and costeffective maintenance in case the fuse element or the insulating element have to be replaced.

There are several ways how to design and further develop the teaching of the present invention in an advantageous way. To this end, it is to be referred to the patent claims subordinate to the independent claims on the one hand and to the following explanation of further embodiments of the invention by way of example, illustrated by the figures on the other hand. In connection with the explanation of the further embodiments of the invention by the aid of the figures, generally further embodiments and further developments of the teaching will be explained.

In the drawings
- Fig. 1: shows a connection structure according to an embodiment of the present invention; and
- Fig. 2: shows a connection structure according to an embodiment of the present invention.

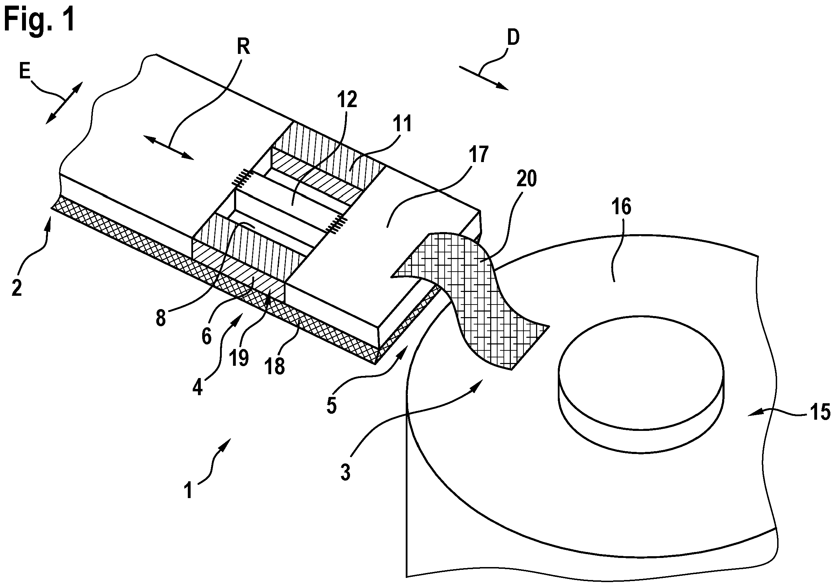

Figure 1 shows a connection structure according to an embodiment of the present invention

In Figure 1 a connection structure 1 is shown comprising a first contacting end 2, connected to a busbar or the like, and a second contacting end 3, connected to a battery cell 15. Starting from the first contacting end 2, the first contacting end 2 is connected to a fuse element 4. The band- or cuboid-shaped fuse element 4 comprises a two layer structure with a metal layer 17 on top of an insulating layer 18 made of plastic. The metal layer 17 comprises an interruption 19, in which a U-shaped mechanical decoupling structure 6 is arranged. Said mechanical decoupling structure 6, being a fixed part 11, comprises a receptacle 8 for a detachable part 12. The detachable part 12, when arranged in said receptacle 8, is electrically connected to both sides along the direction R to the metal layer 17. Further, towards the second contacting end 3, the metal layer 17 is electrically connected with a flexible band 20, wherein in turn the flexible band 20 is electrically connected to a pole 16 of the battery cell 15.

The flexible band 20 being smaller along direction E perpendicular to the main extension direction R allows for mechanical compensation 5 of relative movements along the main extension direction D, which is parallel to the movement direction R, and in part along direction E.

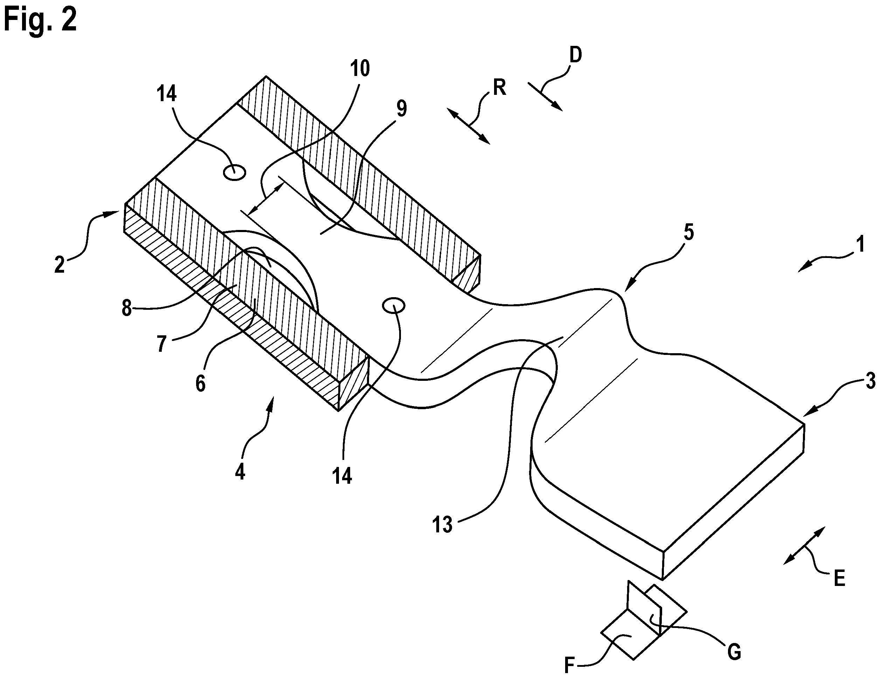

Figure 2 shows a connection structure according to an embodiment of the present invention.

In Figure 2 a connection structure 1 is shown, in which the fuse element 4 is also arranged within a U-shaped mechanical decoupling structure 6. The band-shaped electrically conductive fuse element 4 comprises a thinning area 9, in which the width 10 of the fuse element 4 is smaller than a diameter of the receptacle 8 of the mechanical decoupling structure 6 acting also as insulating element 7. Again, the mechanical decoupling structure 6 is made of plastic. Further, additionally to the thinning area 9, the thinning area 9 is arc- or S-shaped. Outside the thinning area 9, the fuse element 4 is attached to the mechanical decoupling structure 6 via plastic pins 14 on different sides of the thinning area 9. Further down in direction to the second contacting end 3, a mechanical decompensation 5 is provided by a curved section 13 passing over to the flat second contacting end 3. A plane F of the thinning of the thinning area 9 is perpendicular to a plane G of said curved section 13.

At least one embodiment may provide at least one of the following features and/or at least one of the following advantages:
- Easy and less cost-intensive manufacturing.
- Reduced construction space.
- Reliable operation, in particular of the fuse function.
- Easy integration.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference signs

- 1: Connection structure
- 2: First contacting end
- 3: Second contacting end
- 4: Fuse element
- 5: Mechanical decompensation
- 6: Decoupling structure
- 7: Insulating element
- 8: Receptacle
- 9: Thinning area
- 10: Diameter
- 11: Fixed part
- 12: Detachable part
- 13: Curved section
- 14: Plastic pins
- 15: Battery cell
- 16: Pole
- 17: Metal layer
- 18: Insulating layer
- 19: Interruption
- 20: Flexible band

- D: Main extension direction
- E: Spatial direction
- F: Plane
- G: Plane
- R: Movement direction

## Claims

1. Connection structure (1) for providing an electrical connection, in particular for contacting battery cells (15) of a battery, comprising
a first contacting end (2) and a second contacting end (3), wherein the first contacting end (2) and the second contacting end (3) are electrically connected via one or more contacting elements (4, 5), wherein
at least one of the contacting elements (4) provides a fuse function for the electrical connection, 'fuse element', and wherein
at least one of the contacting elements (5) provides a mechanical decompensation function, 'decomp element', said mechanical decompensation function allowing for mechanical decompensation of a relative movement (R) of said first and second contacting ends (2, 3),
**characterized in that**
said at least one fuse element (4) is provided with a mechanical decoupling structure (6), said mechanical decoupling structure (6) allowing for mechanical decoupling of said fuse element (4).

2. Connection structure (1) according to claim 1, **characterized in that** the mechanical decoupling structure (6) comprises an insulating element (7) for electrically insulating said at least one fuse element (4), preferably wherein the insulating element (7) is made of plastic and/or ceramics.

3. Connection structure (1) according to claim 2, **characterized in that** the insulating element (7) is U-shaped providing at least in part a receptacle (8) for receiving said at least one fuse element (4).

4. Connection structure (1) according to one of the claims 1-3, **characterized in that** said at least one fuse element (4) comprises one or more thinning areas (9), said at least one thinning area (9) having a lesser amount of electrically conductive material than an area of said at least one fuse element (4) outside the thinning area (9), preferably wherein said at least one thinning area (9) is arranged symmetrically within a main extension direction (D) of said at least one fuse element (4).

5. Connection structure (1) according to claim 4, **characterized in that** at least one thinning area (9) has a smaller diameter (10) in at least one spatial direction (E) than an area of said at least one fuse element (4) outside the thinning area (9).

6. Connection structure (1) according to at least claim 4, **characterized in that** said at least one fuse element (4) is S-shaped and/or band-shaped, preferably wherein at least one cut-out is provided, preferably wherein said cut-out is rectangular.

7. Connection structure (1) according to one of the claims 1-6, **characterized in that** said at least one fuse element (4) comprises one or more separate electric wires.

8. Connection structure (1) according to one of the claims 1-7, **characterized in that** said at least one fuse element (4) comprises a fixed part (11) and a detachable part (12), said detachable part (12) is adapted to provide said fuse function.

9. Connection structure (1) according to one of the claims 1-8, **characterized in that** said one or more contacting elements (4, 5) are ribbon-, strip-, or plate-shaped.

10. Connection structure (1) according to one of the claims 1-9, **characterized in that** said at least one fuse element (4) and/or the decomp element (5) are integrally formed in one contacting element.

11. Connection structure (1) according to at least claim 10, **characterized in that** said decomp element (5) comprises a curved section (13) and/or a thinning section.

12. Connection structure (1) according to claims 4 and 11, **characterized in that** a plane (F) of a thinning of a thinning area (9) is perpendicular to a plane (G) of said curved section (13).

13. Connection structure (1) according to one of the claims 1-12, **characterized in that** said at least one fuse element (4) is located next to the first contacting end (2) and wherein said decomp element (5) is located next to the second contacting end (3), said second contacting end (3) is adapted to contact a battery cell (15).

14. Connection structure (1) according to at least claim 2, **characterized in that** the insulating element (7) is mechanically coupled (14) to the fuse element (4), preferably detachably.

15. Battery comprising at least one battery cell (15) and a connection structure (1) according to one of the claims 1-14, wherein said second contacting end (3) of said connection structure (1) is electrically connected to a pole (16) of said at least one battery cell (15).
